# EUROPEAN PATENT SPECIFICATION

(11) **EP 2 015 919 B1**
(45) Date of publication and mention of the grant of the patent: **16.12.2009**
(21) Application number: 07724454.9
(22) Date of filing: 23.04.2007
(51) Int. Cl.: B29C 51/26

(54) **METHOD AND APPARATUS FOR VACUUM HOLDING HEATED SHEETS OF PLASTIC MATERIAL**
VERFAHREN UND VORRICHTUNG ZUM HALTEN ERWÄRMTER KUNSTSTOFFMATERIALFLÄCHENGEBILDE MIT UNTERDRUCK
PROCÉDÉ ET APPAREIL DE MAINTIEN PAR ASPIRATION DE FEUILLES EN MATIÈRE PLASTIQUE CHAUFFÉES

(30) Priority: 03.05.2006 IT MI20060861
(43) Date of publication of application: 21.01.2009
(73) Proprietor: Tecnos S.P.A., 20014 Nerviano Milan (IT)
(72) Inventor: FIORENTINI, Francesco, 20144 Milano (IT); BINDA, Gabriele, 21020 Malgesso, Varese (IT); MARIANI, Davide, 21047 Saronno, Varese (IT); D'ADDA, Luciano, 20010 Pogliano Milanese, Milan (IT)
(74) Representative: Coloberti, Luigi
(86) International application number: PCT/EP2007/003524
(87) International publication number: WO 2007/128397

(56) References cited:
- WO-A-2005/014262
- WO-A1-99/64221
- DE-A1- 3 239 270
- DE-C1- 4 416 344
- GB-A- 2 271 961

## Description

### FIELD OF THE INVENTION

This invention refers to vacuum holding of plastic sheet material, and in particular relates to a method and an apparatus appropriately provided for the vacuum holding, for retaining and/or conveying, positioning and processing plastic sheet material along a processing line.

It is known, in conveying sheets of thermoplastic material in installations or in thermoforming systems, that a need exists to grasp sheets of plastic material of a certain thickness, both flexible and having a certain rigidity, for retaining, conveying and/or positioning them in one or more working stations, for example to transfer them from a heating station to a mould along a thermoforming line.

Picking up the sheets by clamps or mechanical gripping members has proved to be somewhat unsuitable, as well as giving rise to certain drawbacks: in practice, the gripping by mechanical clamps involves the need to use sheet material having dimensions considerably larger than the mould, and consequently entails a greater waste of material, uneven heating along the peripheral edges of the sheet, and a possible negative effect during the thermoforming; moreover, mechanical gripping restricts the use of sheets to those having simple geometrical shapes, for example square or rectangular.

Gripping with mechanical means makes it also difficult to convey the sheets along a processing line, and positioning for example in correspondence with a thermoforming mould, where the sheet heated to a plastic state must be accurately positioned, preventing a premature contact with a cold surface of the mould.

In the past, the use of vacuum systems has been variously suggested for picking up plastic films designed to be positioned inside moulds, in the manufacture of foamed panels, or for other applications.

Vacuum-operated systems for picking up plastic films can be found for example in DE 44 16 344, US-A-5,449,429, EP-A-0.838.320 and DE-A-2630021.

Although the use of vacuum-operated systems proves to be suitable in the case of plastic films, due to the natural flexibility of the film itself, and its ability to adhere when cold to any profile under the simple action of the vacuum, in the case of sheets of plastic material of a certain thickness, both of flexible type and having a certain degree of rigidity, for example with thicknesses equivalent to or greater than 150+200 microns of such kind as to prevent their deformability when cold, or in the case of laminated plastic material, the use of vacuum-operated holding systems has proved to be extremely critical and somewhat unsuitable due to the variability of certain physical characteristics of the plastic material, in particular due to the strong dependence of the viscosity upon the heating temperatures.

The use of vacuum-operated systems for holding sheets of plastic material has been generically indicated for example in WO-A-2004/062889 and WO-A-2005/014262, in the thermoforming of hollow bodies.

According to these documents, a sheet of plastic material is introduced into a heater, where it is pre-heated to a first temperature lower than the thermoforming temperature, and subsequently heated to a final working temperature for the sole purpose of reducing the time of the entire working cycle. The initial preheating of the plastic material is in no way related to the characteristics and the physical state of the plastic material, nor is it in any way proposed for solving particular requirements of picking up and holding the sheets.

Within the sphere of certain applications, it is also necessary to pick up and firmly retain a sheet material in a perfectly oriented condition, preventing it from falling or moving as it is conveyed along a processing line, so as not to jeopardise its correct final positioning with respect to a mould or another working station.

Consequently, there is a need to improve the currently existing vacuum-operated sheet holding systems, or to find new solutions capable of enabling the vacuum holding of plastic sheets of a certain weight and/or thickness, or having a certain stiffening degree. For the purposes of this description, the expression "plastic sheet material" is understood as referring both to plastic sheets comprising of a single layer of a polymeric material, and laminated sheets comprising two or more superimposed layers of plastic materials having identical or different chemical or physical characteristics, and thicknesses.

### OBJECTS OF THE INVENTION

The main object of this invention is to provide a method and an apparatus for vacuum holding plastic sheets material, capable of obviating the limits and drawbacks of the currently existing vacuum-operated holding systems.

A further object of the invention is to provide a method and a vacuum-operated sheet holding apparatus capable of firmly retaining sheets of plastic material also of considerable weight and/or thickness, which are extremely versatile, and wholly unaffected by the geometrical shapes and dimensions of the sheets and/or by the physical characteristics of the plastic materials.

A still further object is to provide a method and a vacuum-operated sheet holding apparatus, as mentioned above, which are also capable of exerting a mechanical retaining action, in addition to the vacuum retaining, thereby contributing to ensure a high reliability retention degree in the event of the vacuum being limited or accidentally cut off.

A still further object is to allow, under certain situations, the sheet of plastic material to be hold by vacuum in different positions on a same side or on opposite sides, in correspondence with a same peripheral area of the sheet, thereby achieving a significant saving of material and greater processing facility.

### BRIEF DESCRIPTION OF THE INVENTION

These and further objects of the invention can be achieved by a method for vacuum holding sheets of plastic material according to claim 1, and by means of an apparatus according to claim 8.

In particular, according to a first embodiment of the invention, a method for vacuum holding of plastic sheet material, according to which a sheet material is heated, hold and retained along at least one peripheral edge of a side face, by a vacuum holding device having at least one suction slot connectable to a vacuum source in which the suction slot opens out towards a front surface characterised by the steps of:
providing sheet step support means having a sheet resting surface;
providing a first vacuum-operated sheet holding device, having a front mating surface conformed to said sheet resting surface of the sheet support means;
disposing a plastic sheet in a spread out condition on said resting surface;
heating the plastic sheet to a softening temperature higher than the vitreous transition temperature of the plastic material, maintaining the plastic sheet in the spread out condition on said sheet resting surface;
positioning the vacuum holding device with the suction slot and the mating surface in contact with the plastic material heated to said softening temperature; and:
connecting said suction slot to the vacuum source causing a tight penetration of the plastic material into the suction slot along said peripheral edge.

According to a further feature of the invention, a vacuum-operated sheet-holding apparatus has been provided for holding sheets of plastic material, including a vacuum-operated sheet-holding device having at least one suction slot connectable to a vacuum source; and heating means for heating the plastic sheet;
characterised by comprising:
sheet support means for a plastic sheet, said sheet support means comprising a shaped sheet resting surface conformed for supporting the plastic sheet in a spread out condition;
wherein the vacuum holding device has a front mating surface provided with said suction slot, the mating surface conforming to said shaped sheet resting surface; and
wherein the heating means are conformed and arranged in respect to the sheet support means to heat the plastic sheet to a softening temperature higher than the vitreous transition temperature of the plastic material.

### BRIEF DESCRIPTION OF THE DRAWINGS

These and further features of the method and the apparatus according to this invention, as well as several exemplificative embodiments, will be more clearly evident from the following description with reference to the drawings, in which:
Fig. 1 shows a first embodiment of the vacuum-operated sheet holding apparatus;
Fig. 2 shows an enlarged cross-sectional view of a vacuum-operated sheet holding frame, according to a first embodiment;
Fig. 3 shows an enlarged cross-sectional view of a second embodiment of the vacuum-operated sheet holding frame;
Fig. 4 shows an enlarged cross-sectional view similar to the previous figures, for a third embodiment;
Fig. 5 shows a second embodiment of the sheet holding apparatus, with the vacuum-operated holding device in correspondence with a mould;
Fig. 6 shows an enlarged detail of figure 5;
Fig. 7 shows a diagram of a system for thermoregulation of the vacuum-operated sheet holding frame;
Fig. 8 is a graph showing the variation of the viscosity in relation to the heating temperature, for a first plastic material;
Fig. 9 is a graph showing the variation of the viscosity in relation to the heating temperature, for a second plastic material.

### DETAILED DESCRIPTION OF THE INVENTION

With reference to the various figures, a description will be given of the general characteristics of the method and the vacuum-operated sheet holding apparatus according to the invention, and several preferential embodiments.

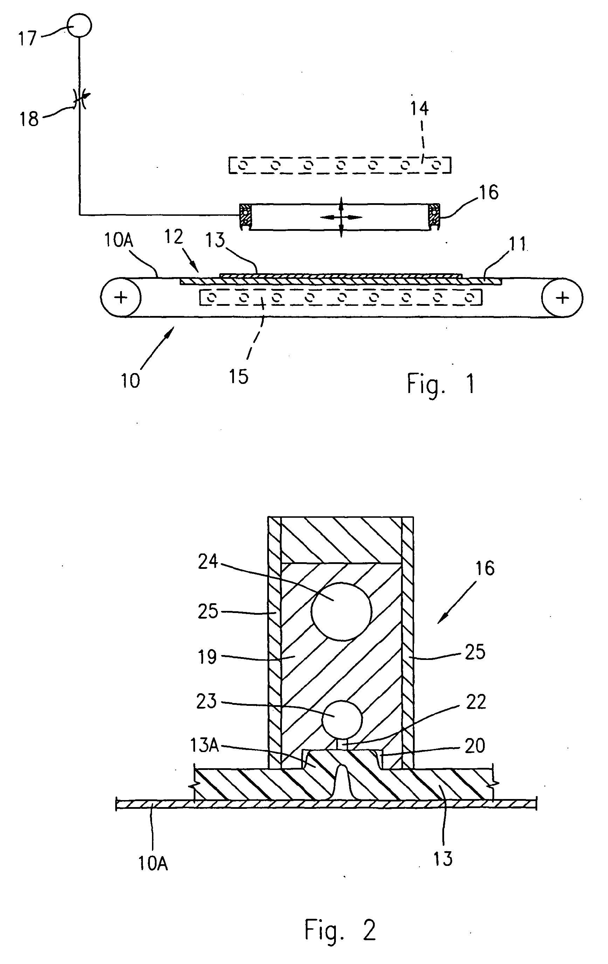

As shown in figure 1, the apparatus comprises a conveyor belt 10 having an upper branch 10A which slides over a support plate 11 defining a sheet resting surface 12 for a sheet 13 of plastic material which must be picked up by vacuum, retained, conveyed and/or positioned along a processing line.

In the case of figure 1 the sheet resting surface 12 is in the form of a flat surface, defined by the upper branch 10A of the conveyor 10; however, the sheet resting surface 12 may be of any shape, provided it is suitable for supporting and allowing a plastic sheet 13 to be rested in a spread out condition on the same resting surface enabling to enable it to be efficiently picked up, hold and retained by vacuum.

The resting surface 12 for supporting the sheet 13, preferably does not have sticking characteristics to prevent adhering of a heated plastic sheet; in the case of figure 1 this can be achieved by making the conveyor belt 10, or more in general, by coating the resting surface 12, with a non-sticking material polytetrafluoroethylene, more commonly known by the trade name "teflon", or other material suitable for such purpose.

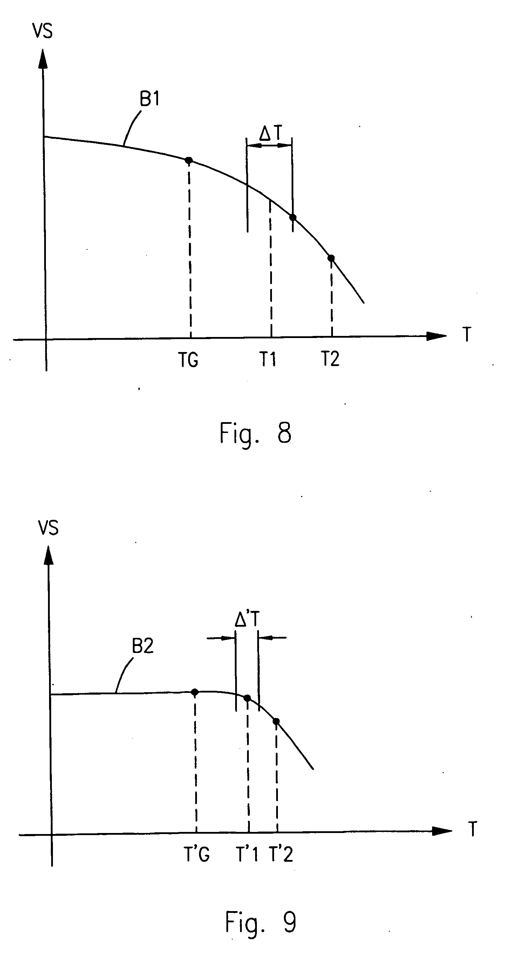

The apparatus also comprises a heating device conformed and arranged in respect to the resting surface 12 for heating the sheets 13 of plastic material to a softening temperature T1 higher than the vitreous transition temperature TG of the involved plastic material; in particular, the heating temperature T1 of the plastic sheet should range between the temperature TG and a working temperature or final thermoforming temperature T2 of the plastic sheet 13, as explained further on with reference to the figures 8 and 9 of the drawings.

The heating device may be of any suitable type; for example it may comprise radiating elements, positioned in any way, for example above the resting surface of the sheet 13, as indicated by reference number 14 in figure 1; in the event of the supporting surface 12, and namely the conveyor belt 10 and the plate 11 in the example of figure 1 being made of material transparent to infrared radiations, the heating device may be positioned beneath upper branch 10 of the conveyor belt and said resting surface 12, as indicated by reference number 15.

The apparatus also comprises a vacuum-operated sheet holding device consisting, for example, of a frame 16 movably supported in the directions of the arrows shown; the frame 16 may have any geometrical configuration and shape with one or more linear and/or curved sides designed to conform both to the outline of one or more peripheral edges of the plastic sheet 13, and a-flat or three-dimensional configuration mating the surface 12 supporting the sheet 13. Moreover, the frame 16 may be shaped and disposed in such a way as to pick up the plastic sheet 13 along a single peripheral edge, along two or more consecutive edges, or around the entire perimeter according to need; the frame 16 is supported to enable it to be moved in the directions of the two arrows in figure 1, either vertically or horizontally by means of any suitable control means.

The vacuum-operated sheet holding frame 16 may be provided on the front side with one or more suction slots connectable to a vacuum source 17, by a manually and/or automatically operated control valve 18, to regulate the vacuum degree in the suction slot 16, and consequently to vary the vacuum holding and retaining force. During the heating, the sheet 13 of plastic material is kept spread out and accurately supported by the resting surface 12, to maintain its planar or shaped configuration.

A first embodiment and the operative mode of the vacuum-operated holding device, are schematically illustrated in the example of figure 2.

As can be seen, one side or each side of the holding frame 16 consists of a metal bar 19, for example made of aluminium or other suitable material having a high thermal conductivity degree.

The bar 19, on the downwardly facing front surface, designed to come into mating contact with one edge of one face of the plastic sheet 13, in the case of figure 2 is provided with a single longitudinal slot 20 appropriately shaped to allow the partial tight penetration of the plastic material, as indicated by reference 13A, after the sheet 13 has been heated to a softening temperature T1 and as soon as the vacuum is generated in the slot 20.

The vacuum in the slot 20 is generated after the frame 16 has been matingly brought into contact with the side face of the sheet 13, by suctioning the air through a plurality of holes 22, only one shown in figure 2, longitudinally aligned to the bar 19.

The holes 22 open out both towards the suction slot 20, and towards a first longitudinal duct 23 close to the slot 20, appropriately connectable to a vacuum source 17 by means of the control valve 18.

Lastly, in figure 2, reference 24 has been used to indicate a second longitudinal duct for the circulation of a thermostatically-controlled fluid for heating the bar 19, to a temperature close to the heating temperature of the plastic sheet 13, while reference 25 has been used to indicate layers of thermally insulating material on the two sides of the metal bar 19.

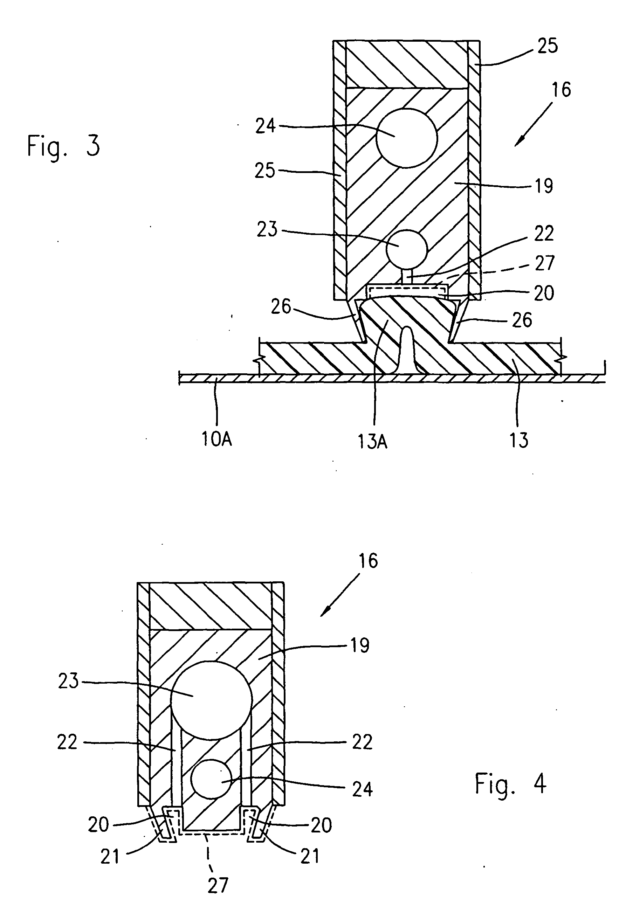

A second embodiment is shown in figure 3 where the same reference numbers of figure 2 have been used to indicate similar or equivalent parts. The solution of figure 3 differs from the solution of figure 2 in that on both sides of the suction slot 20, the bar 19 is provided with a lateral wing 26, to improve the retaining of the sheet 13. The wings 26 may be oriented in any direction; preferably the wings 26 are slanted and converge inwardly, so as to form undercut surfaces which allow a mechanical grip of the ribbing 13A formed by the plastic material of the sheet 13 which, due to the softening caused by the heating, and the vacuum, tightly penetrates into the slot 20; this proves to be advantageous in the case of sheets 13 of considerable weight, thickness or of large dimensions, in that it helps to retain and support the sheet 13 in the event of the vacuum being reduced or shut off, due to accidental causes.

The internal surfaces of the slot 20 and of the wings 26 may be lined with a layer 27 of a non-stick material, such as "Teflon".

In many cases, depending upon the characteristics of the plastic sheets 13 and the nature of the plastic material, it may prove necessary to heat and maintain the metal bar or bars 19, or the mating surface of the vacuum-operated holding device in contact with the sheet 13, at a controlled temperature of a few degrees higher or lower than the heating temperature of the sheet 13, in order to avoid conditions of uneven heating and stretching in correspondence with the edges of the sheet; the heating and thermoregulation of the vacuum-operated holding frame 16 can be achieved in any appropriate way, either electrically, or by circulation of a hot fluid, for example water or air, maintained at an appropriate temperature.

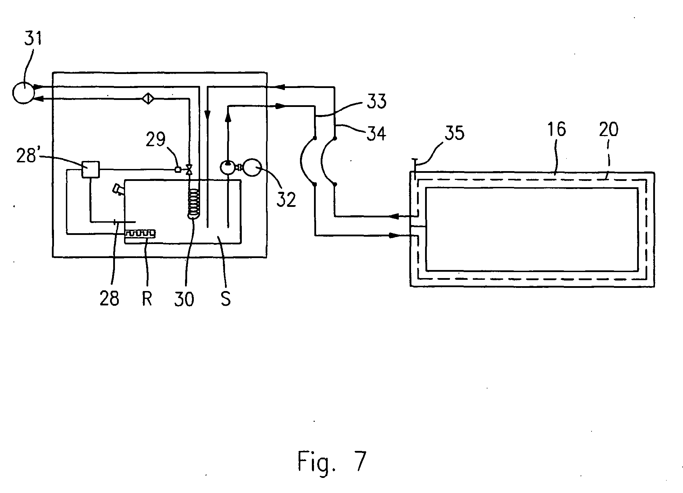

As shown in the example of figures 2 and 3, the heating and the control of the temperature of the bar or bars 19 of the holding frame 16, is obtained by circulation of a thermal fluid along the second duct 24 connected to a supply system, for example of the type shown in figure 7.

In said figure 7, the system for circulation of the heating fluid for the vacuum-operated holding frame 16, comprises a tank S containing the thermal fluid, for example water. Inside the tank S is disposed an electric heating element R for the fluid whose temperature is detected by a thermal probe 28 connected to a control circuit 28' for controlling the heating element R and a solenoid valve 29 for regulation of cooling water, to a pipe coil 30 connected to a water source 31. Reference numbers 33 and 34 in figure 7 have been used to indicate the feeding and the recycling circuit of the thermal fluid, for heating and thermostatic control of the vacuum-operated holding frame 16, which is continuously made to circulate by a pump 32.

Lastly, reference number 35 has been used to indicate a possible second thermal probe for controlling the temperature of the frame 16, operatively connected to the control circuit 28'; it is wholly evident that the system for heating and/or regulating the temperature of the frame 16 may also differ from the one shown.

Figure 4 of the drawings shows, also by way of example, a third embodiment of the cross-section of the frame 16 of the vacuum-operated holding device. In figure 4 the same reference numbers of figures 2 and 3 have been used to indicate similar or equivalent parts.

The solution of figure 4 differs from figure 3 in that the bar or the bars 19 of the frame 16 have two parallely arranged slots 20 which open out frontally on the mating surface to contact the sheet of plastic material 13; also in this case the two slots 20 have undercut internal surfaces, and communicate with the vacuum duct 23 by respective holes 22.

The solution of figure 4 differs due to the fact that the disposition of the ducts 23 and 24 has been reversed with respect to that of figure 3.

More precisely, the duct 24 for circulation of the heating fluid is disposed closer to the front mating surface to contact the sheet 13, thereby enabling a more rapid and accurate regulation and control of the heating temperature of the interface between the bar 19 and the plastic sheet 13.

In the case shown the control of the temperature of the metal bars 19 of the vacuum holding frame 16 is achieved by thermoregulation of the fluid in the storage tank S, and by calculating the thermal losses. It would also be possible to differently regulate the temperature of the bars 19, for example by the use of one or more thermal probes 35 (fig.7) for a direct measuring of the temperature of the frame 16, as specified previously; other solutions are obviously possible compared to those described.

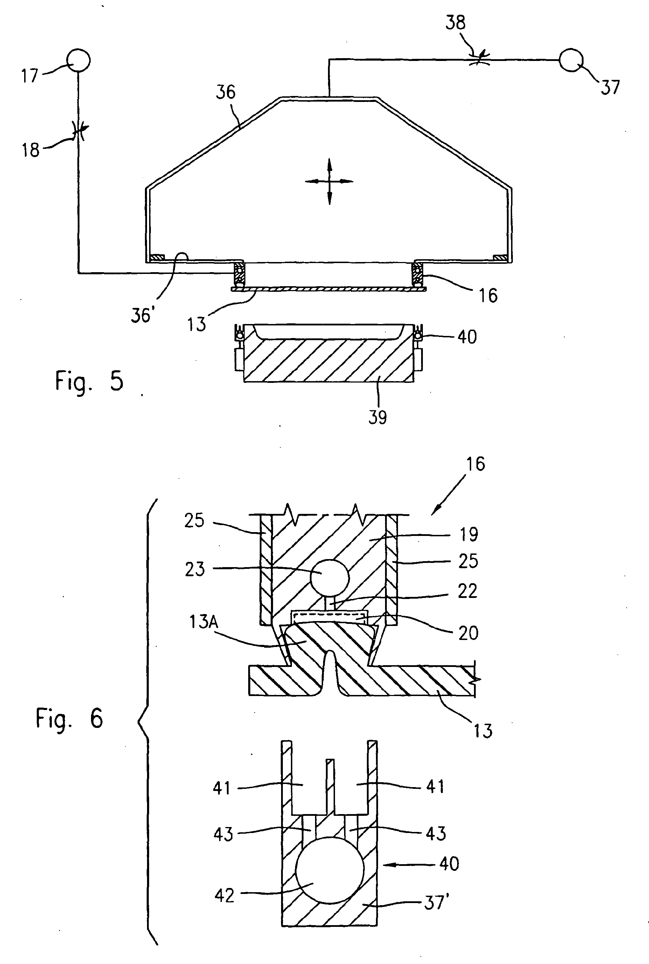

Figures 5 and 6 of the drawings show a further solution for the vacuum-operated sheet holding apparatus according to the invention; again, in figures 5 and 6 the same reference numbers of the preceding figures have been used to indicate similar or equivalent parts.

In the case of figure 5, the plastic sheet 13 is again hold and retained along the peripheral edges by a vacuum-operated holding frame 16 connected to a vacuum source 17; the frame 16 in this case is secured to a bottom wall 36' of a pneumatic box 36, connectable to a vacuum source 37 by a manually or automatically operated control valve 38. The vacuum box 36 helps to support the plastic sheet 13, preventing it from sagging downwards while it is being conveyed towards an operative position on a processing line, for example, over a mould 39.

In the case of figure 5 a double vacuum-operated sheet holding frame is provided, as shown in the enlarged detail of figure 6. In particular, the apparatus comprises a first upper vacuum-operated holding frame 16, of the type shown in the preceding figures, and a second lower vacuum-operated retaining frame 40, for example disposed outside and along the peripheral edge of the mould 39; the lower frame 40 is designed to retain the sheet 13 in the same areas of the upper frame 16, at the opposite side of the sheet 13, in respect to the upper frame 16, when both frames 16 and 40 are in a superimposed condition.

Also in this case, the frame 40 has two suction slots 41 in communication with a longitudinal duct 42 through holes 43. The two frames 16 and 40 have a same geometrical profile and mating surfaces to contact the sheet 13 which are similar or corresponding with each other so that the retention takes place in the same areas of the peripheral edges of the sheet 13, with a consequent saving of material.

In the case shown, the frames 16 and 40 have a flat profile; however, it is possible to provide differently shaped frames, for example with a three-dimensional profile, which conforms to a corresponding profile of the peripheral edge of a mould. It is also possible to provide the use of frames comprising frame members hingedly connected to one another, capable of assuming either a substantially flat, or three-dimensional shape, as for example described in WO-A-05/014262.

In all the cases, the resting surface 12 for supporting and heating the plastic sheets 13, the front mating surface of the frame 16, and the front mating surface of the frame 40, must be appropriately shaped with respect to one another to ensure an efficient vacuum holding and retaining action of a plastic sheet 13 along one or more peripheral edges.

Now, with reference to figures 8 and 9, a more detailed description will be given of the characteristics and advantages of the method and the vacuum-operated holding apparatus for sheets of plastic material, according to this invention.

Figure 8 relates a graph showing the variation of the viscosity VS in respect to the heating temperature T, for a first plastic material B1, while figure 9 shows a similar graph for a second plastic material B2 having characteristics differing from the preceding one.

From a comparison it can be seen that the viscosity VS of B1 varies gradually with the heating temperature T, while in the case of B2 the viscosity VS remains substantially constant or varies slightly in a wide range of temperatures, and then decreases rapidly.

In the same figures, references TG and T'G, respectively, have been used to indicate the vitreous transition temperatures for the two types of plastic material; while references T1 and T'1 have been used to indicate the softening temperatures whereby it is possible to achieve a firm retention of the sheets 13 by vacuum. Lastly references ΔT and Δ'T have been used to indicate the range within which T1 and T'1 can vary in a controlled manner; while references T2 and T'2, respectively, have been used to indicate a second temperature higher than the previous ones, for example a plasticizing temperature at which the plastic material can be processed or moulded by thermoforming.

As can be seen from the two graphs, the range AT or Δ'T relating to changes of the temperatures T1 or T'1 for heating the sheets 13 are depending to a great extent on the characteristics of the plastic material; in the case of the material B2, the range A'T is much narrower and consequently the control is more critical.

For these reasons, according to this invention it has been considered advantageous to activate the vacuum at the temperature T1, respectively T'1, maintaining it within the range ΔT, Δ'T, after having exceeded the temperature TG or T'G of vitreous transition of the plastic material or, in the case of laminated sheets, the temperatures of vitreous transition of the superficial layer designed to come into contact with the vacuum-operated holding frame 16.

From tests carried out it has been noted therefore that the temperature T1 or T'1 at which to activate the vacuum, in general must range between the of vitreous transition temperature TG, T'G of the plastic material, and a preestablished working temperature T2, T'2 which in certain cases may coincide with the vacuum holding temperature T1, T'1 itself.

It is advisable to carry out the vacuum holding and retainment after having exceeded the vitreous transition temperature TG, T'G, when the plastic material has reached a sufficient softening degree to enable its partial tight penetration into the suction slot or slots of the vacuum-operated holding device, as schematically indicated by reference 13A in figures 2, 3 and 6; however it is advisable to control the heating temperatures of the plastic sheets 13 and of the holding frame 16 to prevent the viscosity VS of the plastic material from falling too low; in fact, an excessive reduction in viscosity could jeopardise both the vacuum holding, and the stability of the retention itself during the conveying and positioning of the sheets 13.

The control ΔT, or Δ'T bridging the temperature T1, T'1 for the activation of the vacuum, can be included within a window of a few degrees, for example 5÷8°C degrees in the case of high-density, high molecular weight polyethylene (HDPE), or within a wider window in the case of other plastic materials; as mentioned previously, in certain cases the temperature of the frame 16 must also be controlled within the same range ΔT or Δ'T.

From what has been described and shown in the accompanying drawings, it will be evident that a method and an apparatus are provided for vacuum holding single or multi-layered and/or laminated sheets of plastic material, capable of allowing a stable and reliable vacuum retention, applicable to different manufacturing processes.

By way of example and in no way limitative, the method and the vacuum-operated holding apparatus could be used in vacuum thermoforming and/or moulding processes, in the processes for automatic forming and foaming of carpets in the automotive field, or for other similar applications. The method and the apparatus according to the invention could also be used to carry out simple operations of conveying and/or positioning material sheets, wherever necessary.

The method and the apparatus according to the invention are therefore characterised by their exceptional stability and versatility in vacuum holding, conveying, and/or positioning, in that they do not call for any substantial modification upon changes in the dimensions and geometry of the plastic sheets, except for the shape and dimensions of the vacuum-operated holding frame 16; the frame 16 itself may be of rigid or articulated type, as mentioned previously, to assume a flat and/or a three-dimensional shape once the vacuum holding has taken place, or to adapt to different working requirements. The internal profile of the holding slots may also vary with respect to the one shown. Therefore modifications or changes may be adapted both to the method, and to the apparatus itself, without thereby departing from the claims.

## Claims

1. A method for vacuum holding of plastic sheet material, according to which a sheet material (13) is heated, hold and retained along at least one peripheral edge of a side face, by a vacuum holding device (16) having at least one suction slot (20) connectable to a vacuum source (17) in which the suction slot (20) opens out towards a front surface **characterised by** the steps of:
providing sheet support means (10, 11) having a sheet resting surface (12);
providing a first vacuum-operated sheet holding device (16), having a front mating surface conformed to said sheet resting surface (12) of the sheet support means (10, 11);
heating the plastic sheet (13) to a softening temperature; comprising:
disposing a plastic sheet (13) in a spread out condition on said resting surface (12);
heating the plastic sheet (13) to a softening temperature higher than the vitreous transition temperature (TG) of the plastic material, maintaining the plastic sheet (13) in the spread out condition on said sheet resting surface (12);
positioning the vacuum holding device (16) with the suction slot (20) and the mating surface in contact with the plastic material (13) heated to said softening temperature; and:
connecting said suction slot to the vacuum source causing a tight penetration of the plastic material into the suction slot along said peripheral edge.

2. The method according to claim 1, in which the vacuum-operated holding device (16) and the plastic sheet material (13) have a contact interface, **characterised by** regulating the heating temperature of the plastic sheet (13), and the heating temperature of the holding device (16), to maintain the temperature of the contact interface within a range bridging the softening temperature of the plastic material.

3. The method according to claim 1, in which the vacuum-operated holding device (16) and the plastic sheet (13) have a contact interface, **characterised by** compressing the plastic sheet (13), in correspondence of said contact interface, by pressing the vacuum-operated holding device (16) against the plastic sheet (13).

4. The method according to claim 1, **characterised by** providing the suction slot (20) with lateral wings (26) to form undercut surfaces and causing the plastic sheet (13) to tightly adhere by vacuum, to the undercut surfaces of the suction slot (20).

5. The method according to claim 1, **characterised by** providing a second vacuum-operated holding device (40) having at least one suction slot 41, connectable to a vacuum source, opening out towards a front mating surface transferring the plastic sheet (13) from the first (16) to the second (40) vacuum-operated holding device, in a superimposed condition and retaining the plastic sheet (13) by the second holding device (40) in correspondence of contact areas, opposite to contact areas of the plastic sheet (13) in respect to the first vacuum-operated holding device (16).

6. A vacuum-operated sheet-holding apparatus for holding sheets (13) of plastic material, including a vacuum-operated sheet-holding device (16) having at least one suction slot (20) connectable to a vacuum source, and heating means (14; 15) for heating the plastic sheet (13); the apparatus comprising:
sheet support means (11) for a plastic sheet (13), **characterised in that** said sheet support means (11) comprises a shaped sheet resting surface (12) conformed for supporting the plastic sheet (13) in a spread out condition;
wherein the vacuum holding device has a front mating surface provided with said suction slot (20), the mating surface of the vacuum holding device conforming to said shaped sheet resting surface (12); and
wherein the heating means are conformed and arranged in respect to the sheet support means (11) to heat the plastic sheet (13) to a softening temperature higher than the vitreous transition temperature (TG) of the plastic material.

7. The apparatus according to claim 6, **characterised in that** said sheet resting surface (12) is transparent to infrared radiations.

8. The apparatus according to claim 6, **characterised by** comprising heating means (15) positioned beneath the sheet resting surface (12).

9. The apparatus according to claim 6, **characterised in that** heating means (14) are positioned above the sheet resting surface (12).

10. The apparatus according to claim 6, **characterised in that** the vacuum-operated holding device (16) is provided with a box-shaped chamber (36), connectable to a vacuum source.

11. The apparatus according to claim 6, **characterised in that** the suction slot (20) is provided with undercut internal surfaces (21).

12. The apparatus according to claim 6, **characterised in that** the vacuum-operated holding device is provided with a sheet retaining frame (16) comprising heating means.

13. The apparatus according to claim 12, **characterised in that** said heating means comprise a duct (24) for circulation of a thermal fluid, operatively connectable to a thermal fluid source (26).

14. The apparatus according to claim 13, **characterised in that** the thermal fluid sources (26) comprises thermostatic control means (28).

15. The apparatus according to claim 12, **characterised in that** the vacuum-operated holding device (16) comprises a metal bar (19) having a first suction duct (23) connectable to the vacuum source, said suction duct (23) being in fluid communication with the suction slot (20); and second duct (24) for circulation of a thermal fluid.

16. The apparatus according to claim 15, **characterised in that** the duct (24) for circulation of the thermal fluid is positioned between the suction slot (20) and the suction duct (23).

17. The apparatus according to claim 15, **characterised in that** the suction duct (23) is positioned between the suction slot (20) and the duct (24) for circulation of the thermal fluid.

18. The apparatus according to claim 6, **characterised in that** the suction slot (20) comprises a lining of non-sticking material (27).

## Patentansprüche

1. Verfahren zum Halten von Kunststoffbogenmaterial mit Hilfe von Unterdruck, bei dem ein Bogenmaterial (13) erhitzt, gehalten und entlang mindestens einer Randkante von einer Seitenfläche festgehalten wird, und zwar durch eine Unterdruck-Halteeinrichtung (16), die mindestens einen Saugschlitz (20) aufweist, der mit einer Vakuumquelle (17) verbunden werden kann, wobei der Saugschlitz (20) nach außen in Richtung einer vorderen Fläche geöffnet ist, **gekennzeichnet durch** die Schritte:
Bereitstellen eines Bogenabstützmittels (10, 11), das eine Bogenauflagefläche (12) beinhaltet;
Bereitstellen einer ersten Unterdruck-betriebenen Bogenhalteeinrichtung (16), die eine vordere Kontaktfläche hat, die an die Bogenauflagefläche (12) des Bogenabstützmittels (10, 11) angepasst ist;
Erhitzen des Kunststoffbogens (13) auf eine weichmachende Temperatur; mit:
Anordnen eines Kunststoffbogens (13) in einem ausgebreiteten Zustand auf der Auflagefläche (12);
Erhitzen des Kunststoffbogens (13) auf eine weichmachende Temperatur, die höher ist als die Glasübergangstemperatur (TG) des Kunststoffmaterials, Belassen des Kunststoffbogens (13) in dem ausgebreiteten Zustand auf der Bogenauflagefläche (12);
Positionieren der Unterdruck-Halteeinrichtung (16) mit dem Saugschlitz (20) und der Übergangsfläche in Kontakt mit dem Kunststoffmaterial (13), das auf die weichmachende Temperatur erhitzt ist; und
Verbinden des Saugschlitzes mit der Vakuumquelle, wodurch ein dichtes Eindringen des Kunststoffmaterials in den Saugschlitz entlang der Randkante bewirkt wird.

2. Verfahren nach Anspruch 1, bei dem die Unterdruck-betriebene Halteeinrichtung (16) und das Kunststoffbogenmaterial (13) eine Kontakt-Verbindungsstelle haben, **gekennzeichnet durch** Regulieren der Erhitzungstemperatur des Kunststoffbogens (13) und der Erhitzungstemperatur der Halteeinrichtung (16), um die Temperatur der Kontakt-Verbindungsstelle in einem Bereich zu halten, der die weichmachende Temperatur des Kunststoffmaterials beinhaltet.

3. Verfahren nach Anspruch 1, bei dem die Unterdruck-betriebene Halteeinrichtung (16) und der Kunststoffbogen (13) eine Kontakt-Verbindungsstelle haben, **gekennzeichnet durch** Komprimieren des Kunststoffbogens (13) in Übereinstimmung mit der Kontakt-Verbindungsstelle, indem die Unterdruck-betriebene Halteeinrichtung (16) gegen den Kunststoffbogen (13) gedrückt wird.

4. Verfahren nach Anspruch 1, **gekennzeichnet durch** Versehen des Saugschlitzes (20) mit lateralen Flügeln (26), um hinterschnittene Flächen zu bilden, und Bewirken, dass der Kunststoffbogen (13) **durch** Unterdruck fest an den hinterschnittenen Flächen des Saugschlitzes (20) anhaftet.

5. Verfahren nach Anspruch 1, **gekennzeichnet durch** Bereitstellen einer zweiten Unterdruck-betriebenen Halteeinrichtung (40), die mindestens einen Saugschlitz (41) aufweist, der mit einer Vakuumquelle verbunden werden kann, nach außen in Richtung auf eine vordere Kontaktfläche geöffnet ist, Überführen des Kunststoffbogens (13) von der ersten (16) zu der zweiten (40) Unterdruck-betriebenen Halteeinrichtung, und zwar in einem überlagerten Zustand, und Festhalten des Kunststoffbogens (13) **durch** die zweite Halteeinrichtung (40) in Übereinstimmung mit Kontaktgebieten, und zwar gegenüberliegend zu Kontaktgebieten des Kunststoffbogens (13) bezüglich der ersten Unterdruck-betriebenen Halteeinrichtung (16).

6. Unterdruck-betriebene Bogen-Halteeinrichtung zum Halten von Bögen (13) aus Kunststoffmaterial, mit einer Unterdruck-betriebenen Bogenhalteeinrichtung (16), die mindestens einen Saugschlitz (20) aufweist, der mit einer Vakuumquelle verbunden werden kann, und Heizmitteln (14; 15) zum Erhitzen des Kunststoffbogens (13); wobei die Vorrichtung aufweist:
ein Bogenabstützmittel (11) für einen Kunststoffbogen (13), **dadurch gekennzeichnet, dass** das Bogenabstützmittel (11) eine geformte Bogenauflagefläche (12) aufweist, die ausgestaltet ist, um den Kunststoffbogen (13) in einem ausgebreiteten Zustand abstützend zu halten;
wobei die Unterdruck-Halteeinrichtung eine vordere Kontaktfläche aufweist, die mit dem Saugschlitz (20) versehen ist, wobei die Kontaktfläche der Unterdruck-Halteeinrichtung an die geformte Bogenauflagefläche (12) angepasst ist; und
wobei die Heizmittel ausgestaltet und bezüglich des Bogenabstützmittels (11) angeordnet sind, um den Kunststoffbogen (13) auf eine weichmachende Temperatur zu erhitzen, die höher ist als die Glasübergangstemperatur (TG) des Kunststoffmaterials.

7. Vorrichtung nach Anspruch 6, **dadurch gekennzeichnet, dass** die Bogenauflagefläche (12) für Infrarot-Strahlungen transparent ist.

8. Vorrichtung nach Anspruch 6, **dadurch gekennzeichnet, dass** Heizmittel (15) vorgesehen sind, die unter der Bogenauflagefläche (12) positioniert sind.

9. Vorrichtung nach Anspruch 6, **dadurch gekennzeichnet, dass** Heizmittel (14) über der Bogenauflagefläche (12) positioniert sind.

10. Vorrichtung nach Anspruch 6, **dadurch gekennzeichnet, dass** die Unterdruck-betriebene Halteeinrichtung (16) mit einer kastenförmigen Kammer (36) versehen ist, die mit einer Vakuumquelle verbunden werden kann.

11. Vorrichtung nach Anspruch 6, **dadurch gekennzeichnet, dass** der Saugschlitz (20) mit hinterschnittenen Innenflächen (21) versehen ist.

12. Vorrichtung nach Anspruch 6, **dadurch gekennzeichnet, dass** die Unterdruck-betriebene Halteeinrichtung mit einem Bogenfesthalterahmen (16) versehen ist, der Heizmittel beinhaltet.

13. Vorrichtung nach Anspruch 12, **dadurch gekennzeichnet, dass** die Heizmittel einen Kanal (24) zur Zirkulation eines Wärmefluids aufweisen, der funktional mit einer Wärmefluid-Quelle (26) verbunden werden kann.

14. Vorrichtung nach Anspruch 13, **dadurch gekennzeichnet, dass** die Wärmefluid-Quelle (26) Thermostat-Steuermittel (28) aufweist.

15. Vorrichtung nach Anspruch 12, **dadurch gekennzeichnet, dass** die Unterdruck-betriebene Halteeinrichtung (16) einen Metallbalken (19) aufweist, mit einem ersten Saugkanal (23), der mit der Vakuumquelle verbunden werden kann, wobei der Saugkanal (23) mit dem Saugschlitz (20) in Fluid-Verbindung steht; und
einem zweiten Kanal (24) zur Zirkulation eines Wärmefluids.

16. Vorrichtung nach Anspruch 15, **dadurch gekennzeichnet, dass** der Kanal (24) zur Zirkulation des Wärmefluids zwischen dem Saugschlitz (20) und dem Saugkanal (23) angeordnet ist.

17. Vorrichtung nach Anspruch 15, **dadurch gekennzeichnet, dass** der Saugkanal (23) zwischen dem Saugschlitz (20) und dem Kanal (24) zur Zirkulation des Wärmefluids angeordnet ist.

18. Vorrichtung nach Anspruch 6, **dadurch gekennzeichnet, dass** der Saugschlitz (20) eine Auskleidung aus nichthaftendem Material (37) aufweist.

## Revendications

1. Procédé pour maintenir par aspiration une feuille en matière plastique, selon lequel une matière en feuille (13) est chauffée, maintenue et retenue le long d'au moins un bord périphérique d'une face latérale, par un dispositif de maintien par aspiration (16) présentant au moins une fente d'aspiration (20) pouvant être connectée à une source d'aspiration (17), dans lequel la fente d'aspiration (20) s'ouvre vers une surface avant, **caractérisé en ce qu'**il comprend les étapes consistant à :
fournir des moyens de support de feuille (10, 11) dotés d'une surface d'appui de feuille (12) ;
fournir un premier dispositif de maintien de feuille (16) à commande par aspiration, doté d'une surface d'accouplement avant correspondant à ladite surface d'appui de feuille (12) des moyens de support de feuille (10, 11) ;
chauffer la feuille plastique (13) à une température de ramollissement ; comprenant les étapes consistant à :
disposer une feuille plastique (13) dans une condition étalée sur ladite surface d'appui (12) ;
chauffer la feuille plastique (13) à une température de ramollissement supérieure à la température de transition vitreuse (TG) de la matière plastique, en maintenant la feuille plastique (13) dans la condition étalée sur ladite surface d'appui de feuille (12) ;
positionner le dispositif de maintien par aspiration (16) avec la fente d'aspiration (20) et la surface d'accouplement en contact avec la matière plastique (13) chauffée à ladite température de ramollissement ; et à :
connecter ladite fente d'aspiration à la source d'aspiration pour provoquer une étroite pénétration de la matière plastique dans la fente d'aspiration le long dudit bord périphérique.

2. Procédé selon la revendication 1, dans lequel le dispositif de maintien à commande par aspiration (16) et la feuille en matière plastique (13) ont une interface de contact, **caractérisé en ce qu'**il consiste à réguler la température de chauffage de la feuille plastique (13) et la température de chauffage du dispositif de maintien (16), pour maintenir la température de l'interface de contact dans une plage située autour de la température de ramollissement de la matière plastique.

3. Procédé selon la revendication 1, dans lequel le dispositif de maintien à commande par aspiration (16) et la feuille plastique (13) ont une interface de contact, **caractérisé en ce qu'**il consiste à comprimer la feuille plastique (13) en correspondance avec ladite interface de contact, en pressant le dispositif de maintien à commande par aspiration (16) contre la feuille plastique (13).

4. Procédé selon la revendication 1, **caractérisé en ce qu'**il consiste à munir la fente d'aspiration (20) d'ailes latérales (26) pour former des surfaces en contre-dépouille et à faire adhérer la feuille plastique (13) fortement, par aspiration, aux surfaces en contre-dépouille de la fente d'aspiration (20).

5. Procédé selon la revendication 1, **caractérisé en ce qu'**il consiste à fournir un second dispositif de maintien à commande par aspiration (40) doté d'au moins une fente d'aspiration (41) pouvant être connectée à une source d'aspiration, s'ouvrant vers une surface d'accouplement avant qui transfère la feuille plastique (13) du premier (16) au second (40) dispositif de maintien à commande par aspiration, dans une condition superposée et retient la feuille plastique (13) par le second dispositif de maintien (40) en correspondance avec des zones de contact, en vis-à-vis avec les zones de contact de la feuille plastique (13) par rapport au premier dispositif de maintien à commande par aspiration (16).

6. Appareil de maintien de feuille à commande par aspiration pour maintenir des feuilles (13) de matière plastique, comportant un dispositif de maintien de feuille à commande par aspiration (16) doté d'au moins une fente d'aspiration (20) pouvant être connectée à une source d'aspiration, et des moyens de chauffage (14 ; 15) pour chauffer la feuille plastique (13) ; le dispositif comprenant :
des moyens de support de feuille (11) pour une feuille plastique (13), **caractérisé en ce que** lesdits moyens de support de feuille (11) comprennent une surface d'appui de feuille profilée (12) adaptée pour supporter la feuille plastique (13) dans une condition étalée ;
dans lequel le dispositif de maintien par aspiration comporte une surface d'accouplement avant pourvue de ladite fente d'aspiration (20), la surface d'accouplement du dispositif de maintien par aspiration correspondant à ladite surface d'appui de feuille profilée (12) ; et
dans lequel les moyens de chauffage sont adaptés et agencés par rapport aux moyens de support de feuille (11) pour chauffer la feuille plastique (13) à une température de ramollissement supérieure à la température de transition vitreuse (TG) de la matière plastique.

7. Appareil selon la revendication 6, **caractérisé en ce que** ladite surface d'appui de feuille (12) est transparente aux rayonnements infrarouges.

8. Appareil selon la revendication 6, **caractérisé en ce qu'**il comprend des moyens de chauffage (15) positionnés en dessous de la surface d'appui de feuille (12).

9. Appareil selon la revendication 6, **caractérisé en ce que** des moyens de chauffage (14) sont positionnés au-dessus de la surface d'appui de feuille (12).

10. Appareil selon la revendication 6, **caractérisé en ce que** le dispositif de maintien à commande par aspiration (16) est pourvu d'une chambre en forme de caisson (36) pouvant être connectée à une source d'aspiration.

11. Appareil selon la revendication 6, **caractérisé en ce que** la fente d'aspiration (20) est pourvue de surfaces internes en contre-dépouille (21).

12. Appareil selon la revendication 6, **caractérisé en ce que** le dispositif de maintien à commande par aspiration est pourvu d'un cadre de retenue de feuille (16) comprenant des moyens de chauffage.

13. Appareil selon la revendication 12, **caractérisé en ce que** lesdits moyens de chauffage comprennent un conduit (24) permettant la circulation d'un fluide thermique et pouvant être connecté de manière fonctionnelle à une source de fluide thermique (26).

14. Appareil selon la revendication 13, **caractérisé en ce que** la source de fluide thermique (26) comprend des moyens de commande thermostatiques (28).

15. Appareil selon la revendication 12, **caractérisé en ce que** le dispositif de maintien à commande par aspiration (16) comprend une barre métallique (19) dotée d'un premier conduit d'aspiration (23) pouvant être connecté à la source d'aspiration, ledit conduit d'aspiration (23) étant en communication fluidique avec la fente d'aspiration (20) ; et un second conduit (24) permettant la circulation d'un fluide thermique.

16. Appareil selon la revendication 15, **caractérisé en ce que** le conduit (24) de circulation du fluide thermique se trouve entre la fente d'aspiration (20) et le conduit d'aspiration (23).

17. Appareil selon la revendication 15, **caractérisé en ce que** le conduit d'aspiration (23) se trouve entre la fente d'aspiration (20) et le conduit (24) de circulation du fluide thermique.

18. Appareil selon la revendication 6, **caractérisé en ce que** la fente d'aspiration (20) comprend un revêtement de matière anti-adhésive (27).
